# EUROPÄISCHE PATENTSCHRIFT

(11) **EP 0 412 413 B1**
(45) Veröffentlichungstag und Bekanntmachung des Hinweises auf die Patenterteilung: **12.04.1995**
(21) Anmeldenummer: 90114734.8
(22) Anmeldetag: 01.08.1990
(51) Int. Cl.: H04Q 11/04, H04M 11/06

(54) **Schaltungsanordnung für Festverbindungen in digitalen Kommunikationsnetzen**
Circuit arrangement for fixed connections in digital communication networks
Dispositif pour des liaisons fixées dans des réseaux numériques

(30) Priorität: 09.08.1989 DE 3926309
(43) Veröffentlichungstag der Anmeldung: 13.02.1991
(73) Patentinhaber: TELENORMA GMBH, 60326 Frankfurt am Main (DE)
(72) Erfinder: Trick, Ulrich, Dr.-Ing., D-6232 Bad Soden 2 (DE); Roth, Peter, Dipl.-Ing., D-6000 Frankfurt 60 (DE); Schreiber, Manfred., DIPL: Ing., D-6466 Gründau 1 (DE)

(56) Entgegenhaltungen:
- DE-A- 3 732 679
- NACHRICHTEN ELEKTRONIK UND TELEMATIK. Bd. 42, Nr. 1-2, Januar 1988, HEIDELBERG DE Seiten 49 - 53; Z.CHAHABADI: 'ISDN-Inseln schon heute verbinden'
- MILCOM 88, SESSION 56, PAPER 2. Bd. 3, 23. Oktober 1988, SAN DIEGO US Seiten 1 - 6; K.KIM ET AL.: 'ISDN Basic Access for Remote Locations'
- CONFERENCE ON ISDN 88. Juni 1988, LONDON GB. Seiten 251 - 262; F.CAUSSARIEU ET AL.: 'Interface Board for PCs Providing S0 Interface with Voice and Data Communications Capabilities'
- TELCOM REPORT. Bd. 12, Nr. 1-2, Januar 1989, MUNCHEN DE Seiten 14 - 17; H.SEIDEL ET AL.: 'Wirtschaftlicher Zugang zum ISDN'

## Beschreibung

Die Erfindung betrifft eine Schaltungsanordnung für Festverbindungen in digitalen Kommunikationsnetzen nach dem Oberbegriff des Patentanspruchs 1.

In einem Sonderdruck der Fa. kabelmetal electro GmbH, der anläßlich der VDPI-Tagung am 5./6. März 1987 erschienen ist, wird ein mit PCM2 D bezeichnetes heute verfügbares System für Festverbindungen zwischen ISDN-Basisanschlüssen beschrieben. Dort ist auf Seite 4.13 unter Punkt 6 erwähnt, daß das System PCM 2D aus insgesamt 3 Funktionseinheiten besteht. Diese 3 Funktionseinheiten werden mit PCM2 TD, PCM2 VD und PCM2 ZE bezeichnet. Wie diese Funktionseinheiten des PCM2 D zusammenwirken, ist im Bild 15 dargestellt. Daraus geht hervor, daß für eine Festverbindung zwischen 2 im Beispiel angegebenen Nebenstellenanlagen oder auch zwischen einer Nebenstellenanlage und einem Teilnehmerendgerät insgesamt 2 jeweils an den Endstellen angeordnete PCM2 TD-Einrichtungen notwendig sind. Dementsprechend sind an der Vermittlungsseite auch die zugehörigen 2 PCM2 VD-Einrichtungen erforderlich. Mit diesen Einrichtungen ist es möglich, über herkömmliche Anschlußleitungen 2 Endstellen so miteinander zu verbinden, daß zwei Nutzdatenkanäle (B1 und B2) mit einer Kapazität von je 64 kbit/s und ein Signalisierungskanal zur Verfügung stehen.

Wie aus den in den Bildern 16, 17 und 18 dargestellten Blockschaltbildern hervorgeht, sind die jeweiligen Funktionseinheiten für eine Festverbindung relativ aufwendig.

Im telcom report 10 (1987) special "Multiplex- und Leitungseinrichtungen" ist der sogenannte ISDN-Basisanschluß beschrieben. Das Wesentliche an diesem ISDN-Basisanschluß ist das sog. Netzabschlußgerät mit der Kurzbezeichnung NT, welches an der Teilnehmerseite angeordnet ist. Ein Übersichtsschaltplan eines solchen Netzabschlußgeräts ist auf Seite 167 in Bild 3 dargestellt. Dieses Netzabschlußgerät weist zum Endgerät TE hin eine sog. So-Schnittstelle auf. Zur Vermittlungsstelle VSt hin ist eine sog. Uko-Schnittstelle vorgesehen, welche eine der Anschlußleitung entsprechende Reichweite hat und so ausgelegt ist, daß vorhandene Teilnehmeranschlußleitungen für eine digitale Übertragung benutzt werden können. Die dazu notwendigen Einzelheiten einschließlich der Codierverfahren sind in dem vorgenannten Aufsatz ausführlich beschrieben. Es ist unter anderem erwähnt, daß ein Netzabschlußgerät NT aus hochintegrierten Schaltungen besteht, wobei zu berücksichtigen ist, daß durch entsprechende Stückzahlen eine relativ preisgünstige Herstellung von Netzabschlußgeräten möglich sein wird.

Die Aufgabe der Erfindung besteht darin, eine Schaltungsanordnung anzugeben, womit auf der Basis von Netzabschlußgeräten Festverbindungen eingerichtet werden können, ohne daß der gesamte Aufwand für ein PCM2 D-System notwendig ist. Die Festverbindungen sollen dabei sowohl zwischen Vermittlungsanlagen untereinander als auch zwischen einer Vermittlungsanlage und einem Teilnehmerendgerät geschaltet werden können. Zudem soll sich die Vermittlungsanlage an der S-Schnittstelle bei Anschluß eines Teilnehmerendgerats über eine Festverbindung genau so verhalten wie bei direkten Anschluß eines Teinehmerendgeräts.

Für die Lösung dieser Aufgabe sind Merkmale vorgesehen, wie sie im Patenanspruch 1 angegeben sind.

Damit wird in vorteilhafter Weise erreicht, daß mindestens drei der Funktionseinheiten, wie sie für das PCM2 D-System benötigt werden, durch eine modifizierte Netzabschlußeinrichtung ersetzt werden können. Dies ergibt eine preiswerte Lösung beim Schalten von PCM2-Festverbindungen, wobei alle für das Dienste integrierende Digitalnetz genormten Verfahren beibehalten werden können.

Weiterbildungen der Erfindung sind in den Unteransprüchen angegeben. Dabei ist u.a. erwähnt, daß eine zusätzliche Netzabschlußeinrichtung der erfindungsgemäßen Art dazu dienen kann, bei einer digitalen Anschlußleitung eine Erhöhung der Reichweite zu erzielen.

Ein Ausführungsbeispiel der Erfindung wird nachfolgend anhand von Zeichnungen näher erläutert.

Es zeigt:
- Figur 1: das Blockschaltbild einer für Festverbindungen ausgeführten Netzabschlußeinrichtung.
- Figur 2: Das Blockschaltbild eines Informationsumsetzers.
- Figur 3a: den Einsatz einer besonders ausgeführten Netzabschlußeinrichtung bei einer Festverbindung.
- Figur 3b: das Prinzip eines PCM 2D-Systems.
- Figur 4: den Einsatz einer besonders ausgeführten Netzabschlußeinrichtung in einer digitalen Anschlußleitung.

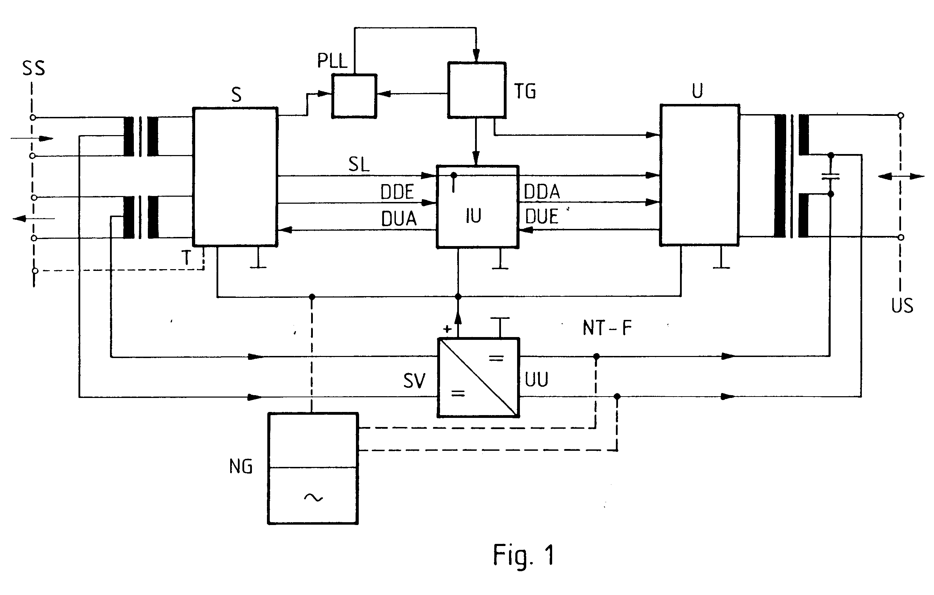

Aus dem in der Figur 1 dargestellten Blockschaltbild einer besonders ausgeführten Netzabschlußeinrichtung NT-F ist ersichtlich, daß der Speisestrom im Gegensatz zu der Normalausführung einer Netzabschlußeinrichtung über die S-Schnittstelle SS zugeführt wird. Dabei kann es sich um die Betriebsspannung einer Vermittlungsanlage, z.B. VA1 von z. B. 48 Volt handeln.

An die S-Schnittstelle ist also eine Vermittlungsanlage VA1 angeschlossen. Die Stromversorgung SV kann aus einem Gleichspannungs-Wandler bestehen, welcher die Betriebsspannung UU für die U-Schnittstelle US liefert und auch die für die besonders ausgeführte Netzabschlußeinrichtung NT-F intern benötigte Betriebsspannung erzeugt. An die U-Schnittstelle ist eine normal ausgeführte Netzabschlußeinrichtung NT angeschlossen, welche über ihre S-Schnittstelle mit einer weiteren Vermittlungsanlage VA2 oder einem Endgerät EG verbunden ist.

Über die S-Schnittstelle SS der besonders ausgeführten Netzabschlußeinrichtung NT-F wird außerdem ein Takt zugeführt, der über eine Phasenregelschleife PLL zum Synchronisieren eines Taktgebers TG dient. Dieser Taktgeber TG liefert die internen Steuertakte und gibt einen Takt über die U-Schnittstelle US aus.

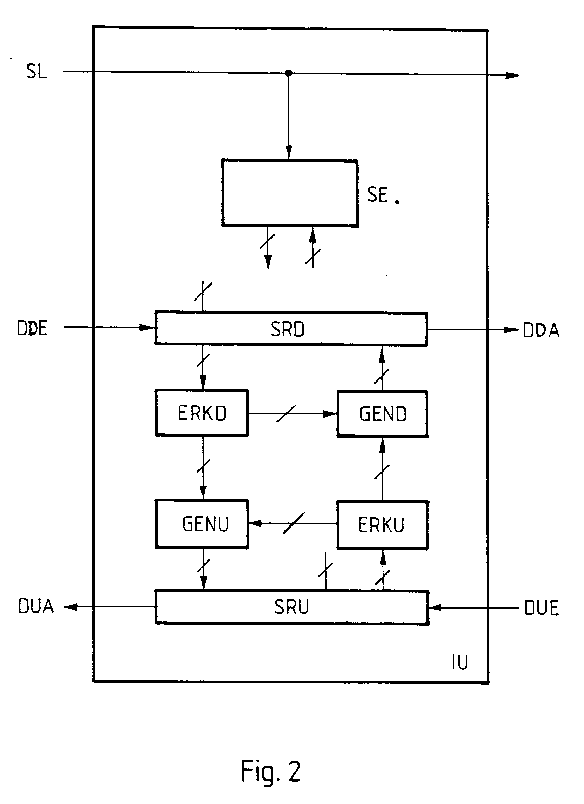

In der besonders ausgeführten Netzabschlußeinrichtung NT-F werden hochintegrierte Bausteine S und U benutzt, wie sie auch für die normal ausgeführte Netzabschlußeinrichtung NT verwendet werden. Diese hochintegrierten Bausteine S und U werden durch externe Programmierung auf den für die besonders ausgeführte Netzabschlußeinrichtung NT-F notwendigen Betriebsmodus eingestellt. Die geräteinterne Schnittstelle, im telcom report mit IOM bezeichnet, wird dabei durch einen zusätzlichen Informationsumsetzer IU so abgewandelt, daß eine Anpassung an die modifizierte Betriebsart der besonders ausgeführten Netzabschlußeinrichtung NT-F gegeben ist. In der Figur 2 ist ein Blockschaltbild des Informationsumsetzers IU dargestellt. Diesem Informationsumsetzer IU werden von dem für die S-Schnittstelle zuständigen Baustein S Steuerleitungen SL zugeführt, wobei es sich im wesentlichen um Rahmentakte und Datentakte handelt. Mit Hilfe einer im Informationsumsetzer IU befindlichen Steuereinrichtung SE und speziell dafür eingesetzter Schieberegister SRD, SRU werden die jeweils ankommenden Steuerdatenströme da raufhin untersucht, ob Steuerbefehle umzusetzen sind. Zu diesem Zweck ist für jede Flußrichtung der Steuerdatenströme ein eigenes Schieberegister SRD (down-stream) und SRU (up-stream) vorgesehen. Die von den für die S-Schnittstelle SS zuständigen Baustein S kommenden down-stream-Steuerdaten werden dem Informationsumsetzer IU an einem Eingang DDE angeboten, in dem zuständigen Schieberegister SRD aufgenommen und über den down-stream-Steuerdaten-Ausgang DDA zu dem für die U-Schnittstelle US zuständigen Baustein U geschaltet. In umgekehrter Richtung erfolgt der entsprechende Datenfluß über den up-stream-Steuerdaten-Eingang DUE und den up-stream-Steuerdaten-Ausgang DUA vom Baustein U zum Baustein S.

An die im Informationsumsetzer IU befindlichen Schieberegister SRD, SRU sind Erkennerschaltungen ERKD, ERKU angeschlossen, welche Datenworte parallel aufnehmen können. Durch eine besondere Decodierung wird erkannt, ob es sich um Steuerbefehle handelt, die wegen der andersartigen Betriebsweise der besonders ausgeführten Netzabschlußeinrichtung NT-F umzusetzen sind. Jede Erkennerschaltung ERKD (down-stream) und ERKU (up-stream) hat Zugriff zu Generatorschaltungen GEND, bzw. GENU. Durch diese Generatorschaltungen GEND, GENU werden umgesetzte Befehlsworte erzeugt, die in gleicher Richtung oder in entgegengesetzter Richtung weitergegeben werden. Dabei werden die umgesetzten Befehlsworte von der Steuereinrichtung SE aus zum richtigen Zeitpunkt parallel in das jeweilige Schieberegister SRD, SRU geladen, so daß sie dann mit dem Datenstrom seriell abgegeben werden.

Für die Funktion der Erkennerschaltungen ERKD, ERKU und für die Generatorschaltungen GEND, GENU lassen sich programmierbare Festwertspeicher einsetzen, die jeweils mit einem empfangenen Befehlswort adressiert werden und dabei ein umgesetztes Befehlswort ausgeben. Je nach den betrieblichen Gegebenheiten sind jedoch auch andere Strukturen denkbar.

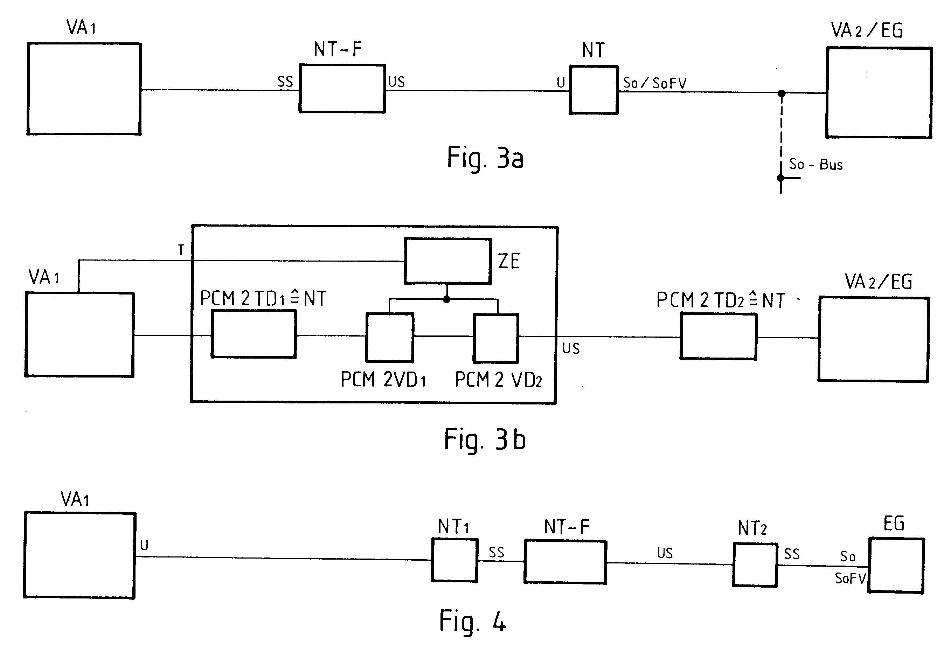

In der Figur 3a ist dargestellt, wie eine besonders ausgeführte Netzabschlußeinrichtung NT-F für eine Festverbindung in eine zwischen zwei Vermittlungsanlagen VA1 und VA2 verlaufende Verbindungsleitung eingefügt ist. Die besonders ausgeführte Netzabschlußeinrichtung NT-F wird über ihre S-Schnittstelle SS mit der die Verbindung speisenden ersten Vermittlungsanlage VA1 verbunden. Die andere Schnittstelle US dieser besonders ausgeführten Netzabschlußeinrichtung NT-F ist mit der gleichnamigen Schnittstelle U einer Netzabschlußeinrichtung NT in Normalausführung verbunden. An diese normale Netzabschlußeinrichtung NT ist über deren S-Schnittstelle (So/So FV (Festverbindung)) die andere Vermittlungsanlage VA2 angeschlossen. Anstelle einer anderen Vermittlungsanlage VA2 kann über eine derartige Festverbindung auch ein Endgerät EG angeschlossen sein.

In der Figur 3b ist dargestellt, welche für eine Festverbindung eingesetzten Einrichtungen bei einem PCM 2D-System durch die besonders ausgeführte Netzabschlußeinrichtung NT-F eingespart werden. Dabei handelt es sich um die teilnehmerseitige Abschlußeinheit PCM 2TD, welche im Aufwand etwa einer normal ausgeführten Netzabschlußeinrichtung NT entspricht. Außerdem werden die Einrichtungen PCM 2 VD1 und PCM 2 VD2 sowie die dazu gehörende zentrale Einrichtung ZE eingespart. Die an der U-Schnittstelle US angeschlossene weitere teilnehmerseitige Abschlußeinheit PCM 2TD2 wird beim Einsatz einer besonders ausgeführten Netzabschlußeinrichtung NT-F lediglich durch eine Netzabschlußeinrichtung NT in Normalausführung ersetzt, sofern sie dieser nicht ohnehin entspricht. Wenn bei einem PCM 2D-System eine besondere Taktleitung T vorgesehen ist, so kann eine derartige zusätzliche Taktleitung T ohne weiteres über einen zusätzlichen Eingang der besonders ausgeführten Netzabschlußeinrichtung NT-F zugeführt werden.

In der Figur 4 ist ein weiterer Einsatzfall für eine besonders ausgeführte Netzabschlußeinrichtung NT-F dargestellt. Wenn beispielsweise ein Endgerät EG in größerer Entfernung von der S-Schnitt stelle SS einer Netzabschlußeinrichtung NT1 angeordnet werden muß, und dabei die Reichweite dieser Schnittstelle nicht ausreicht, so kann mit einem besonders ausgeführten Netzabschlußgerät NT-F für Festverbindungen eine zusätzliche U-Schnittstelle US gebildet werden, womit eine größere Reichweite erzielt werden kann. Am Ende einer dadurch entstehenden Verbindungsleitung wird ein weiteres Netzabschlußgerät NT 2 in Normalausführung angeschlossen, so daß für den Anschluß des Endgerätes EG wieder eine S-Schnittstelle SS entsteht. Auf diese Weise ist es möglich, Endgeräte EG in einer Entfernung vom normalen Netzabschluß zu betreiben, die größer ist als die Reichweite einer S-Schnittstelle SS.

Wenn es aus betrieblichen Gründen erforderlich ist, kann die besonders ausgeführte Netzabschlußeinrichtung NT-F mit einem aus dem Wechselstromnetz gespeisten Netzgerät NG für die Stromversorgung ausgestattet sein. Von diesem Netzgerät NG wird dann die interne Stromversorgung sowie die Speisung der U-Schnittstelle US übernommen.

## Patentansprüche

1. Schaltungsanordnung für Festverbindungen in digitalen Kommunikationsnetzen, wobei genormte Schnittstellen, insbesondere Netzabschlußeinrichtungen, mit einer zur Teilnehmerseite führenden sog. S-Schnittstelle und einer zur Vermittlungsanlage führenden sog. U-Schnittstelle und für Festverbindungen vorgesehene Baugruppen eingesetzt werden, welche eine doppelt gerichtete Informationsübertragung nach genormten Protokollen ermöglichen,
**dadurch gekennzeichnet**,
daß die gesamte Schaltungsanordnung aus einer besonders ausgeführten Netzabschlußeinrichtung (NT-F) für Festverbindungen besteht, welche über ihre an eine Vermittlungsanlage (VA1) angeschlossene S-Schnittstelle (SS) mit Speisestrom und Takt versorgt wird und über ihre zu einem Endgerät (EG) oder einer anderen Vermittlungsanlage (VA2) führende U-Schnittstelle (US) eine Versorgungsspannung (UU) und einen Takt abgibt, wobei die Besonderheit der Netzabschlußeinrichtung darin
besteht daß innerhalb dieser Netzabschlußeinrichtung (NT-F) ein Informationsumsetzer (IU) zwischen von normalen Netzabschlußeinrichtungen her bekannte hochintegrierte Schnittstellenbausteine (S, U) geschaltet ist, der erkennt, wann eine wortweise Umsetzung von Steuerbefehlen doppelt gerichtet vorzunehmen ist, um die Schnittstellenbausteine (S, U) aneinander anzupassen, welche durch externe Programmierung auf den für diese Netzabschlußeinrichtung (NT-F) notwendigen Betriebsmodus eingestellt sind.

2. Schaltungsanordnung nach Anspruch 1,
**dadurch gekennzeichnet**,
daß innerhalb des Informationsumsetzers (IU) Erkennerschaltungen (ERKD, ERKU) und Generatorschaltungen (GEND, GENU) zur Umsetzung von Steuerbefehlen angeordnet sind.

3. Schaltungsanordnung nach Anspruch 1,
dadurch gekennzeichnet,
daß die besonders ausgeführte Netzabschlußeinrichtung (NT-F) einen Taktgenerator (TG) aufweist, der über eine Phasenregelschleife (PLL) auf den über die S-Schnittstelle (SS) empfangenen Takt synchronisiert wird.

4. Schaltungsanordnung nach Anspruch 1,
dadurch gekennzeichnet,
daß durch Einschleifen einer zusätzlichen besonders ausgeführten Netzabschlußeinrichtung (NT-F) und einer normal ausgeführten Netzabschlußeinrichtung (NT) in eine digitale Anschlußleitung eine Erhöhung der Reichweite der S-Schnittstelle (SS) erzielt wird.

5. Schaltungsanordnung nach Anspruch 1,
dadurch gekennzeichnet,
daß bei einer über eine Vermittlungsanlage (VAx) geführten oder von einer Vermittlungsanlage (VA1) ausgehenden Festverbindung zwischen 2 Vermittlungsanlagen (VA1, VA2) oder einer Vermittlungsanlage (VA1) und einem Endgerät (EG) ein digitales 2-Kanal-Übertragungssystem PCM-2D bestehend aus dem teilnehmerseitigen Netzabschlußgerät (PCM 2TD1) und dem vermittlungsseitigen Netzabschlußgerät (PCM 2VD1) sowie der Zentraleinheit (ZE) und das vermittlungsseitige Netzabschlußgerät (PCM 2VD2) eines weiteren 2-Kanal- Übertragungssystems PCM 2D durch die besonders ausgeführte Netzabschlußeinrichtung (NT-F) ersetzt wird.

6. Schaltungsanordnung nach Anspruch 1,
dadurch gekennzeichnet,
daß die besonders ausgeführte Netzabschlußeinrichtung (NT-F) an Stelle einer leitungsgebundenen Stromversorgung (SV) eine Netzstromversorgung (NG) oder einen Gleichspannungswandler mit separat zugeführter Gleichspannung aufweist.

7. Schaltungsanordnung nach Anspruch 1,
dadurch gekennzeichnet,
daß die besonders ausgeführte Netzabschlußeinrichtung (NT-F) anstatt über die S-Schnittstelle (SS) über eine separate Zuleitung mit einem Takt versorgt wird und einen Übertragungstakt über die U-Schnittstelle (US) abgibt.

## Claims

1. Circuit arrangement for fixed connections in digital communication networks, wherein standardised interfaces, particularly network terminating devices and with a so-called S interface leading to the subscriber side and a so-called U interface leading to the communications exchange and sub-assemblies provided for fixed connections, are used and enable a two-way information transmission in accordance with standardised protocols, characterised thereby that the entire circuit arrangement consists of a specially constructed network terminating device (NT-F) for fixed connections, which is fed with supply current and clock pulses by way of its S interface (SS) connected to a communications exchange (VA1) and delivers a feed voltage (UU) and a clock pulse by way of its U interface (US) leading to a terminal apparatus (EG) or to another communications exchange (VA2), wherein the characteristic feature of the network terminating device consists in that an information translator (IU) is connected within this network terminating device (NT-F) between highly-integrated interface blocks (S, U) known from normal network terminating devices and recognises when a word translation of control commands is undertaken in two directions in order to match the interface blocks (S, U ) to one another, which are set by external programming to the operating mode necessary for this network terminating device (NT-F).

2. Circuit arrangement according to claim 1, characterised thereby that recognitiion circuits (ERKD, ERKU) and generator circuits (GEND, GENU) for translation of control commands are arranged within the information translator (IU).

3. Circuit arrangement according to claim 1, characterised thereby that the specially constructed network terminating device (NT-F) comprises a clock pulse generator (TG), which is synchronised by way of a phase regulating loop (PLL) to the clock pulse received by way of the S interface (SS).

4. Circuit arrangement according to claim 1, characterised thereby that an increase in the transmission range of the S interface (SS) is achieved through connecting an additional specially constructed network terminating device (NT-F) and a normally constructed network terminating device (NT) into a digital connection line.

5. Circuit arrangement according to claim 1, characterised thereby that in the case of a fixed connection, which is led by way of a communications exchange (VAx), or goes out from a communications exchange (VA1), between two communications exchanges (VA1, VA2) or a communications exchange (VA1) and a terminal apparatus (EG), a digital two-channel transmission system PCM-2D consisting of the network terminal apparatus (PCM 2TD1) at the subscriber side and the network terminating apparatus (PCM 2VD1) at the communications exchange side as well as the central unit (ZE) and network terminating apparatus (PCM 2VD2), which is at the communications exchange side, of a further two-channel transmission system PCM 2D, is replaced by the specially constructed network terminating device (NT-F).

6. Circuit arrangement according to claim 1, characterised thereby that the specially constructed network terminating device (NT-F) has, in place of a wirebound current supply (SV), a mains current supply (NG) or a direct voltage transformer with separately fed direct voltage.

7. Circuit arrangement according to claim 1, characterised thereby that the specially constructed network terminating device (NT-F) is supplied with a clock pulse by way of a separate line instead of by way of the S interface (SS), and delivers a transmission clock pulse by way of the U interface (US).

## Revendications

1. Dispositif pour des liaisons fixées dans des réseaux de communication numériques dans lequel sont utilisées des interfaces normalisées, en particulier des équipements de terminaison de réseau, avec ce qu'on appelle une interface-S conduisant au côté abonné et ce qu'on appelle une interface-U conduisant à l'installation de commutation et des cartes électroniques prévues pour des liaisons fixées, qui rendent possible une transmission d'information bidirectionnelle selon des protocoles normalisés,
caractérisé en ce que
l'ensemble du dispositif comprend un équipement de terminaison de réseau (NT-F) d'exécution particulière pour des liaisons fixées qui est alimenté en courant d'alimentation et en impulsions de synchronisation par l'intermédiaire de son interface-S (SS) raccordée à une installation de commutation (VA1) et qui délivre une tension d'alimentation (UU) et une fréquence par l'intermédiaire de son interface-U (US) qui conduit à un terminal (EG) ou à une autre installation de commutation (VA2), la particularité de l'équipement de terminaison de réseau consistant à mettre en circuit, à l'intérieur de cet équipement de terminaison de réseau (NT-F), un convertisseur d'information (IU) entre des modules d'interfaces (S, U) à haut degré d'intégration connus des équipements normaux de terminaison de réseau, qui reconnaît quand une conversion par mot est à effectuer de façon bidirectionnelle par des instructions de commande, afin d'adapter les uns aux autres les modules d'interfaces (S, U) qui sont réglés par une programmation interne sur le mode de fonctionnement nécessaire à cet équipement de terminaison de réseau (NT-F).

2. Dispositif selon la revendication 1,
caractérisé en ce que,
à l'intérieur du convertisseur d'information (IU), des circuits de modules de reconnaissance (ERKD, ERKU) et des circuits de générateurs (GEND, GENU) sont placés pour convertir des instructions.

3. Dispositif selon la revendication 1,
caractérisé en ce que
l'équipement de terminaison de réseau (NT-F) d'exécution particulière présente un générateur de rythme (TG) qui est synchronisé, par l'intermédiaire d'une boucle de régulation de phase (PLL), à la fréquence reçue par l'interface-S (SS).

4. Dispositif selon le revendication 1,
caractérisé en ce que
l'on obtient, grâce au bouclage d'un équipement de terminaison de réseau (NT-F) supplémentaire d'exécution particulière et d'un équipement de terminaison de réseau (NT) d'exécution normale dans une ligne de raccordement numérique, une augmentation du rayon d'action de l'interface-S (SS).

5. Dispositif selon la revendication 1,
caractérisé en ce que,
dans une liaison fixée passant par une installation de commutation (VAx) ou partant d'une installation de commutation (VA1), entre deux installations de commutation (VA1, VA2) ou entre une installation de commutation (VA1) et un terminal ((EG), un système de transmission numérique à deux canaux (PCM-2D) comprenant l'appareil de terminaison de réseau (PCM 2TD1) côté abonné et l'appareil de terminaison de réseau (PCM 2VD1) côté commutation, ainsi que l'unité centrale (ZE) et l'appareil de terminaison de réseau (PCM 2VD2) côté commutation d'un autre système de transmission à 2 canaux (PCM 2D) sont remplacés par l'équipement de terminaison de réseau (NT-F) d'exécution particulière.

6. Dispositif selon la revendication 1,
caractérisé en ce que
l'équipement de terminaison de réseau (NT-F) d'exécution particulière présente, à la place d'une alimentation en courant (SV) guidée, une alimentation par le réseau (NG) ou un convertisseur continu-continu, dont la tension continue est amenée séparément.

7. Dispositif selon la revendication 1,
caractérisé en ce que
l'équipement de terminaison de réseau (NT-F) d'exécution particulière est alimenté avec des impulsions de synchronisation par l'intermédiaire d'une ligne d'alimentation séparée, au lieu de l'être par l'intermédiaire de l'interface-S (SS) et délivre une fréquence de transmission par l'intermédiaire de l'interface-U (US).
